# EUROPEAN PATENT SPECIFICATION

(11) **EP 2 524 016 B1**
(45) Date of publication and mention of the grant of the patent: **21.05.2014**
(21) Application number: 11701156.9
(22) Date of filing: 14.01.2011
(51) Int. Cl.: C09K 8/524, C09K 8/60, C09K 8/68, C09K 8/74

(54) **SURFACTANTS FOR REDUCTION OF WATER BLOCKS AND/OR GAS CONDENSATES AND ASSOCIATED METHODS**
TENSIDE ZUR REDUKTION VON WASSERBLÖCKEN UND/ODER GASKONDENSATEN SOWIE ZUGEHÖRIGE VERFAHREN
TENSIOACTIFS POUR RÉDUCTION DE BLOCAGES DE PORES PAR FILTRAT ET/OU DE CONDENSATS DE GAZ ET PROCÉDÉS CORRESPONDANTS

(30) Priority: 15.01.2010 US 688497
(43) Date of publication of application: 21.11.2012
(73) Proprietor: Halliburton Energy Services, Inc., Houston, TX 77072 (US)
(72) Inventor: SAINI, Rajesh, K., Cypress, TX 77433 (US); ROBB, Ian D., Lawton, OK 73507 (US)
(74) Representative: Turner, Craig Robert
(86) International application number: PCT/GB2011/000049
(87) International publication number: WO 2011/086359

(56) References cited:
- US-A- 3 275 552
- US-A1- 2003 045 605
- US-A1- 2008 026 957

## Description

### BACKGROUND OF THE INVENTION

The present invention relates to fluids useful for subterranean operations, and more particularly, to treatment fluids and methods for the reduction of water blocks and/or gas condensates.

Various procedures have been developed and utilized that may increase the flow of hydrocarbons from hydrocarbon-containing subterranean formations penetrated by well bores. For example, a conventional production stimulation technique may involve creating and extending fractures in the subterranean formation to provide flow channels therein through which hydrocarbons flow from the formation to the well bore. The fractures may be created by introducing a fracturing fluid into the formation at a rate sufficient to exert a sufficient pressure on the formation to create and extend fractures therein. Solid fracture proppant materials, such as sand, may be suspended in the fracturing fluid so that upon introducing the fracturing fluid into the formation and creating and extending fractures therein, the proppant material may be carried into the fractures and deposited therein. Such a treatment may prevent the fractures from closing due to subterranean forces when the introduction of the fracturing fluid has ceased.

Water-based fluids are typically used to fracture the subterranean formation, and when treated with conventional surfactants to recover the fracturing fluid, typically only a small portion of the fracturing fluid can be recovered. The aqueous fluid retained in the formation may increase the water saturation level of the formation, adversely affecting, among other things, the relative permeability to hydrocarbon flow, effective flow area, fracture length and the well productivity.

The water saturation levels of the formation may also increase due to, among other things, cross flow from water-bearing zones or other regions of the formation and filtrate invasion from water-based drilling fluids. In the latter case, the water saturation level of the formation near the well bore may be especially high, which may lower the relative permeability of the formation and thus the production of hydrocarbons by the water-blocked formation.

In gas wells, besides water blocks, liquid hydrocarbons may accumulate and lower the permeability of the formation rocks. Moreover, liquid hydrocarbons that condense out of the gas phase due to the decline in pressure below the dew point pressure of the gas also may hinder the production of hydrocarbons.

Several conventional surfactants have been used in attempts to alleviate these problems. Surfactants, which contain a hydrophilic and a hydrophobic group, are mixed with a treatment fluid, *inter alia,* to lower the surface tension of the fluid in order to facilitate the cleanup and mitigate formation damage caused by either water blocks or gas condensates. In addition to lowering surface tension, surfactants also may change the formation wettability. This results from a decrease in the capillary pressure of the flow channels in the subterranean formation, which may be accomplished by, among other things, changing the contact angle so that clean-up process can be very facile and hydrocarbon can flow with less resistance.

Cationic, anionic and zwitterionic surfactants may be used to enhance the production of hydrocarbons. Chemical systems other than surfactants used to accomplish the same objective may include finely dispersed emulsions. In recent years, use of these emulsions to improve gas productivity has been gradually increasing. While these surfactants have been used successfully, there may be disadvantages. For example, in many cases, at least some portion of the surfactant may interfere with other components included in the fluid (e.g., friction reducing agents and corrosion inhibitors) inadvertently, which may hinder or prevent optimal production of hydrocarbons. Moreover, such surfactants and chemical systems may not provide ideal characteristics including, but not limited to, solubility of the surfactant in a variety of well bore treatment fluids. For example, low cost and good surface tension lowering is important.

US 2008/026957 discloses methods of treating wells and producing fluids from subterranean formations with treatment fluids comprising heteropolysaccharides. US 2003/045605 discloses compositions comprising a base fluid and a monoester copolymer of styrene and maleic anhydride. US 3275552 discloses a surface-active composition which comprises a suitable surface active agent in combination with a water soluble, srystalline or waxy carrier or binder in solid form.

### SUMMARY OF THE INVENTION

The present invention relates to fluids useful for subterranean operations, and more particularly, to treatment fluids and methods for the reduction of water blocks and/or gas condensates.

According to one aspect of the present invention, there is provided a method according to claim 1.

Preferably, the treatment fluid comprises a friction reducing agent and the method comprises introducing the treatment fluid into at least a portion of a subterranean formation at a rate and pressure sufficient to create or enhance at least one or more fractures in the subterranean formation.

In another aspect, the invention provides a treatment fluid according to claim 14.

Other features and advantages of the present invention will be readily apparent to those skilled in the art upon a reading of the description of preferred embodiments which follows.

### BRIEF DESCRIPTION OF THE DRAWINGS

These drawings illustrate certain aspects of some of the embodiments of the present invention, and should not be used to limit or define the invention.
Figure 1 is a diagram of a vertical sand column containing a large glass solvent reservoir and a drainage stopcock.
Figure 2 shows a plot of flow rate of solutions through the sand column.

### DESCRIPTION OF PREFERRED EMBODIMENTS

The present invention relates to fluids useful for subterranean operations, and more particularly, to treatment fluids and methods for the reduction of water blocks and/or gas condensates.

Of the many advantages of the compositions and related methods of the present invention (only some of which are alluded to herein), is that the quaternary ammonium surfactant may improve oil and/or gas production by reducing the occurrence of water blocks and/or gas condensates in the treated portion of the formation. Without being limited by theory, once introduced into the formation, the quaternary ammonium surfactant is thought to adsorb onto rock surfaces in the treated portion of the formation. Once adsorbed, it is believed that the quaternary ammonium surfactant may increase the contact angle between water and the surfaces of the rock in the formation. By way of example, the contact angle may be increased from less than 90° to an angle closer to 90°. This may directly (or indirectly) lead to reduced capillary pressure in the porosity of the formation. Reduced capillary pressure may lead to increased water-flow rates. As will be appreciated, improved water-flow rates should allow a reduction in existing water blocks, as well as a reduction in the formation of water blocks. Moreover, it is also believed that the quaternary ammonium surfactant may be used as a remedial method for clean up of the existing water/or gas condensate blocks.

In accordance with embodiments of the present invention, the treatment fluids comprise an aqueous base fluid and a quaternary ammonium surfactant comprising a main alkyl chain and three alkyl side chains on the ammonium ion that thereby create a bulky head group. In certain embodiments, it is believed that the bulky head group on the quaternary ammonium surfactant results in good adsorption and the reduction of bilayer formation.

By way of example, the aqueous based fluid of embodiments of the treatment fluids of the present invention may be any fluid comprising an aqueous component. Suitable aqueous components include, but not limited to, fresh water, salt water, brine (e.g., saturated or unsaturated saltwater), seawater, and any combination thereof. Generally, the aqueous component may be from any source. Suitable aqueous based fluids may include foams. One of ordinary skill in the art, with the benefit of the present disclosure, will recognize suitable aqueous based fluids for use in the treatment fluids and methods of the present invention. In some embodiments, the aqueous base fluid may be present in a treatment fluid of the present invention in an amount in the range of about 75% to about 99.9% of the treatment fluid.

The quaternary ammonium surfactant of embodiments of the treatment fluids of the present disclosure may be any suitable surfactant comprising a main alkyl chain and three side alkyl chains on the ammonium ion thereby creating a bulky head group. As used herein, the term "main alkyl chain" is defined to be an alkyl group comprising 12 to 22 carbons. Suitable main alkyl chains include alkyl chains derived from vegetable oils. Examples include, but are not limited to, alkyl trialkylammonium bromides, dialkyldiethylammonium chlorides, alkyl imidazolines, polyethoxylated alkylammmonium chlorides, alkyldimethylbenzylammonium chlorides, alkylpyridinium chlorides, alkyl diammonium pentamethyl chlorides, and any derivatives and combinations thereof. The term "derivative" includes any compound that is made from one of the listed compounds, for example, by replacing one atom in the listed compound with another atom or group of atoms, rearranging two or more atoms in the listed compound, ionizing one of the listed compounds, or creating a salt of one of the listed compounds. As used herein, the term "side alkyl chain" is defined to be an alkyl group comprising 1 to 14 carbons. Suitable side alkyl chains include, but are not limited to, methyl, ethyl, propyl, i-propyl, n-butyl, i-butyl, s-butyl, t-butyl, n-pentyl, i-pentyl, amyl, methyl-n-propyl, methyl-i-propyl, dimethyl ethyl, hexyl, octyl, ethyl hexyl, benzyl, ethyl benzyl, and any derivative thereof.

The quaternary ammonium surfactant of the treatment fluids of the present disclosure may be a surfactant of the following general formula: 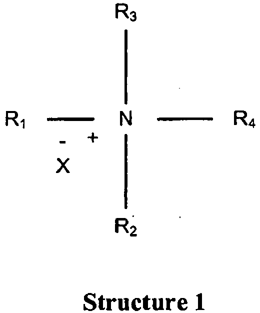
R₁ is either a saturated or unsaturated, branched or straight chain alkyl comprising about 12 carbons to about 22 carbons, and R₂, R₃ and R₄ are independently selected from the group consisting of a saturated or unsaturated, branched or straight chain alkyl or aryl group comprising about 1 to about 14 carbons, and any combination thereof. X- is an anion such as Cl, Br, I, tosylate, mesylate, sulfate or nitrite.

In certain embodiments the sum of the carbon atoms in R₂, R₃ and R₄ side alkyl chains may be at least 6. In preferred embodiments, the sum of the carbons in R₂, R₃ and R₄ may range from about 6 to about 16. In the most preferred embodiments the sum of the carbons in R₂, R₃ and R₄ may range from about 10 to about 12. Examples of suitable surfactants for use in the present disclosure, include but are not limited to, coco dimethyl benzyl ammonium chlorides, palmityl diethyl benzyl ammonium chlorides, oleyl diethyl ethylbenzyl ammonium chlorides, octadecyl tripropyl ammonium chlorides, tallow dimethyl benzyl ammonium chlorides, tall oil diethyl ethyl hexyl ammonium chlorides, dodecyl tributyl ammonium chlorides, hydrogenated tallow 2-ethylhexyl dimethyl ammonium chlorides, hydrogenated tallow benzyl diethyl ammonium chlorides, and any combination thereof.

Sufficient concentrations of a suitable quaternary ammonium surfactant may be present in the treatment fluids of the present invention to provide a desired effect. The amount of the cationic surfactant to include in the treatment fluid depends on a number of factors including, but not limited to, the composition and the porosity of the subterranean formation. In some embodiments, the quaternary ammonium surfactant may be present in a treatment fluid of the present invention in an amount in the range of about 0.001% to about 3% by volume of the treatment fluid. In some embodiments, the quaternary ammonium surfactant may be present in an amount in the range of about 0.01% to about 0.5% by volume of the treatment fluid. In certain embodiments of the present invention, the quaternary ammonium surfactant may be provided in a concentrated solution prior to its combination with the other components necessary to form a treatment fluid of the present invention.

Maintaining sufficient viscosity in these treatment fluids is important for a number of reasons. For example, maintaining sufficient viscosity is important in fracturing and sand control treatments for particulate transport and/or to create or enhance fracture width. Also, maintaining sufficient viscosity may be important to control and/or reduce fluid-loss into the formation. In one embodiment, maintaining viscosity of the treatment fluids helps reduce the turbulence in the flowing fluids and thereby reduces the pressure required to pump the treatment fluid. At the same time, while maintaining sufficient viscosity of the treatment fluid often is desirable, it may also be desirable to maintain the viscosity of the treatment fluid in such a way that the viscosity also may be easily reduced at a particular time, *inter alia,* for subsequent recovery of the fluid from the formation. To provide the desired viscosity, viscosifying agents commonly are added to the treatment fluids. The viscosifying agent included in the treatment fluids of the present invention may comprise any suitable polymer that may be capable of being crosslinked, including, but not limited to, diutan gums, xanthan gums, and other polysaccharides including galactomannans, cellulose derivatives, derivatives thereof, and any combination thereof. Other suitable gums include, but are not limited to, hydroxyethylguar, hydroxypropylguar, carboxymethylguar, carboxymethylhydroxyethylguar and carboxymethylhydroxypropylguar. Examples of suitable cellulose derivatives include hydroxyethyl cellulose, carboxyethylcellulose, carboxymethylcellulose, and carboxymethylhydroxyethylcellulose; derivatives thereof, and combinations thereof. The crosslinkable polymers included in the treatment fluids of the present invention may be naturally-occurring, synthetic, or a combination thereof. The crosslinkable polymers may comprise hydratable polymers that contain one or more functional groups such as hydroxyl, cis-hydroxyl, carboxyl, sulfate, sulfonate, phosphate, phosphonate, amino, or amide groups. In certain embodiments, the crosslinkable polymers may be at least partially crosslinked, wherein at least a portion of the molecules of the crosslinkable polymers are crosslinked by a reaction comprising a crosslinking agent.

The viscosifying agents should be present in the treatment fluids of the present invention in an amount sufficient to provide the desired viscosity of the treatment fluid. In certain embodiments, the viscosifying agents may be present in an amount in the range of from about 0.03% to about 3% by weight of the treatment fluid. In certain embodiments, the viscosifying agent may be present in an amount in the range of from about 0.1% to about 1% by weight of the treatment fluid. In certain embodiments, crosslinking agents are generally included in the treatment fluids of the present invention to crosslink at least a portion of the molecules of the crosslinkable polymers to form a crosslinked polymer. The term "crosslinking agent" is defined herein to include any molecule, atom, or ion that is capable of forming one or more crosslinks between molecules of the crosslinkable polymer and/or between one or more atoms in a single molecule of the crosslinkable polymer. The crosslinking agent in the treatment fluids of the present invention may comprise a metal ion that is capable of crosslinking at least two molecules of the crosslinkable polymer. Examples of suitable crosslinking agents include, but are not limited to, borate ions, zirconium IV ions, titanium IV ions, aluminum ions, antimony ions, chromium ions, iron ions, copper ions, and zinc ions. These ions may be provided by providing any compound that is capable of producing one or more of these ions; examples of such compounds include, but are not limited to, boric acid, disodium octaborate tetrahydrate, sodium diborate, pentaborates, ulexite, colemanite, zirconium lactate, zirconium lactate triethanolamine, zirconium carbonate, zirconium acetylacetonate, zirconium malate, zirconium citrate, zirconium diisopropylamine lactate, titanium lactate, titanium malate, titanium citrate, titanium ammonium lactate, titanium triethanolamine, and titanium acetylacetonate, aluminum lactate, aluminum citrate, antimony compounds, chromium compounds, iron compounds, copper compounds, zinc compounds, and combinations thereof. An example of a suitable commercially available compound capable of providing metal ions is "CL-24TM" crosslinker available from Halliburton Energy Services, Inc., Duncan, Oklahoma. In certain embodiments of the present invention, the crosslinking agent may be present in a crosslinked polymer, wherein at least a portion of the molecules of the crosslinkable polymer are crosslinked by the crosslinking agent.

In some embodiments, the crosslinking agent may comprise a delayed crosslinking agent, which may be formulated to form crosslinks between polymer molecules after a certain time or under certain conditions (*e.g*., temperature, pH, etc.). In some embodiments, the treatment fluid may comprise a crosslinking delaying agent. The crosslinking delaying agent may be included in the treatment fluid, inter alia, to delay crosslinking of the crosslinkable polymers until desired. One of ordinary skill in the art, with the benefit of this disclosure, will know the appropriate amount of the crosslinking delaying agent to include in the treatment fluids for a desired application.

Suitable crosslinking agents may be present in the treatment fluids of the present invention in an amount sufficient to provide, inter alia, the desired degree of crosslinking between molecules of the crosslinkable polymers. In certain embodiments, the crosslinking agent may be present in the treatment fluids of the present invention in an amount in the range of from about 10 parts per million ("ppm") to about 500 ppm by weight of the treatment fluid. In certain exemplary embodiments, the crosslinking agent may be present in the treatment fluids of the present invention in an amount in the range of from about 75 ppm to about 200 ppm by weight of the treatment fluid. One of ordinary skill in the art, with the benefit of this disclosure, will recognize the appropriate type and amount of crosslinking agent to include in a treatment fluid of the present invention based on, among other things, the temperature conditions of a particular application, the type of crosslinkable polymers used, the molecular weight of the crosslinkable polymers, and/or the pH of the treatment fluid.

In certain embodiments, the treatment fluids of the present invention may comprise a friction reducing agent that reduces energy losses within the treatment fluids. For example, friction reducing agents may reduce energy losses upon introduction of the aqueous treatment fluid into a well bore due to friction between the aqueous treatment fluid in turbulent flow and the formation or in the well bore. Any friction reducing agent suitable for use in subterranean applications may be suitable for use in the present invention. In an embodiment, the aqueous treatment fluids of the present invention may further comprise a friction reducing agent that comprises acrylamide and an ionic comonomer. In one embodiment, the friction reducing agent may comprise acrylamide and an acrylic acid. The term "friction reducing agent," as used herein, refers to a copolymer that reduces frictional losses due to friction between an aqueous treatment fluid in turbulent flow and tubular goods (*e.g*. pipes, coiled tubing, etc.) and/or the formation. The term "copolymer," as used herein, is not limited to polymers comprising two types of monomeric units, but includes any combination of monomeric units, *e.g*., terpolymers, tetrapolymers, and the like. In an embodiment, the friction reducing agent included in the treatment fluids of the present invention may comprise any suitable polymer that may be a polysaccharide capable of being crosslinked. Suitable polysaccharides include, but are not limited to, diutan gums, xanthan gums, and other polysaccharides including galactomannans, cellulose derivatives, derivatives thereof, and any combination thereof. Other suitable gums include, but are not limited to, hydroxyethylguar, hydroxypropylguar, carboxymethylguar, carboxymethylhydroxyethylguar and carboxymethylhydroxypropylguar. Examples of suitable cellulose derivatives include hydroxyethyl cellulose, carboxyethylcellulose, carboxymethylcellulose, and carboxymethylhydroxyethylcellulose; derivatives thereof, and combinations thereof. The crosslinkable polymers included in the treatment fluids of the present invention may be naturally-occurring, synthetic, or a combination thereof.

Generally, a friction reducing agent of the present invention may be included in any aqueous treatment fluid used in subterranean treatments to reduce friction. Such subterranean treatments include, but are not limited to, stimulation treatments (*e.g*., fracturing treatments, acidizing treatments, fracture acidizing treatments) and remedial operations. The friction reducing agents of the present invention may have either an anionic or cationic nature. Those of ordinary skill in the art, with the benefit of this disclosure, will be able to recognize a suitable subterranean treatment where friction reduction may be desired. While the friction reducers of the present invention may be suitable for use in a variety of aqueous treatment fluids, they may be particularly useful in treatment fluids wherein a friction reducing polymers' reduced sensitivity to salt is desired.

The friction reducing agents of the present invention comprise acrylamide and an ionic monomer such as acrylic acid, methacrylic acid AMPS or DMEAMA. Generally, the ionic monomer present in the friction reducing copolymers of the present invention may be any monomer that maximizes friction reduction while minimizing flocculation and salt intolerance. In determining a suitable ionic monomer for use in the present invention, a variety of techniques may be used including, but not limited to, determining the radius of gyration for a particular friction reducing copolymer in the presence of interfering salts. Generally, including an ionic monomer that will give the copolymer a larger radius of gyration is desirable. It is believed that friction reducing agents possess large radii of gyration, in addition to generally having a molecular weight greater than 1,500,000 atomic mass units ("amu"). The ionic comonomer included in the friction reducing agents of the present invention are believed to increase radii of gyration through electrostatic repulsion, relative to those polymers composed entirely of acrylamide. Those of ordinary skill in the art, with the benefit of this disclosure, will be able to select an appropriate ionic comonomer to include in the friction reducing copolymers of the present invention based on a variety of factors, including the desired level of friction reduction and flocculation properties.

The amount of acrylamide and ionic comonomer to include in the friction reducing copolymers of the present invention may be determined based on a number of factors, including the desired friction reduction, flocculation properties, etc. Generally, the acrylamide may be present in the friction reducing copolymers of the present invention in an amount in the range of from about 60% to about 95% by weight and an ionic comonomer in an amount in the range of from about 5% to about 40% by weight.

The friction reducing agents of the present invention should have a molecular weight sufficient to provide a desired level of friction reduction. Generally, friction reducing copolymers having higher molecular weights may be needed to provide a desirable level of friction reduction. For example, in some embodiments, the weight average molecular weight of the friction reducing copolymers may be in the range of from about 1,500,000 to about 20,000,000, as determined using intrinsic viscosity, light scattering or gel permeation chromatography. Those of ordinary skill in the art will recognize that friction reducing copolymers having molecular weights outside the listed range may still provide some degree of friction reduction in an aqueous treatment fluid.

The friction reducing agents of the present invention should be included in the aqueous treatment fluids of the present invention in an amount sufficient to provide the desired reduction of friction. In some embodiments, a friction reducing agent of the present invention may be present in an amount in the range of from about 0.02% to about 0.4% by weight of the treatment fluid . In some embodiments, a friction reducing agent of the present invention may be present in an amount in the range of from about 0.05% to about 0.3% by weight of the treatment fluid.

The friction reducing agents suitable for use in the present invention may be delivered in accordance with any of a variety of methods such as a water emulsion or an oil emulsion. In one embodiment, a suitable friction reducing agent may be added in powder form. Those of ordinary skill in the art, with the benefit of this disclosure, will recognize an appropriate method to synthesize and provide a suitable friction reducing agent.

In some embodiments, other additives may optionally be included in the treatment fluids of the present invention. Examples of such additives may include, but are not limited to, corrosion inhibitors, acids, fluid loss control additives, breakers, scale inhibitors, and clay stabilizers. A person of ordinary skill in the art, with the benefit of this disclosure, will recognize when such optional additives should be included in a treatment fluid used in the present invention, as well as the appropriate amounts of those additives to include.

The treatment fluids of the present invention may comprise particulates, such as proppant particulates or gravel particulates. Such particulates may be included in the treatment fluids of the present invention, for example, when a gravel pack is to be formed in at least a portion of the well bore or a proppant pack is to be formed in one or more fractures in the subterranean formation. Particulates suitable for use in the present invention may comprise any material suitable for use in subterranean operations. Suitable materials for these particulates may include, but are not limited to, sand, bauxite, ceramic materials, glass materials, polymer materials, TEFLON^{®} (polytetrafluoroethylene) materials, nut shell pieces, cured resinous particulates comprising nut shell pieces, seed shell pieces, cured resinous particulates comprising seed shell pieces, seed shell pieces, cured resinous particulates comprising seed shell pieces, fruit pit pieces, cured resinous particulates comprising fruit pit pieces, wood, composite particulates, and combinations thereof. Suitable composite particulates may comprise a binder and a filler material wherein suitable filler materials include silica, alumina, fumed carbon, carbon black, graphite, mica, titanium dioxide, metasilicate, calcium silicate, kaolin, talc, zirconia, boron, fly ash, hollow glass microspheres, solid glass, and combinations thereof. The mean particulate size generally may range from about 8mm to about 0.037mm (2 mesh to about 400 mesh) on the U.S. Sieve Series; however, in certain circumstances, other mean particulate sizes may be desired and will be entirely suitable for practice of the present invention. In particular embodiments, preferred mean particulate size distribution ranges are one or more of 3.36mm/1.68mm, 2.39mm/1.19mm, 1.68mm/0.84mm, 1.19mm/0.60mm, 0.84mm/0.40mm, 0.60mm/0.28mm, 0.4mm/0.25mm, 0.4mm/0.21mm, 0.30mm/0.21mm (6/12, 8/16, 12/20, 16/30, 20/40, 30/50, 40/60, 40/70, or 50/70 mesh). It should be understood that the term "particulate," as used in this disclosure, includes all known shapes of materials, including substantially spherical materials, fibrous materials, polygonal materials (such as cubic materials), and mixtures thereof. Moreover, fibrous materials, that may or may not be used to bear the pressure of a closed fracture, may be included in certain embodiments of the present invention. In certain embodiments, the particulates included in the treatment fluids of the present invention may be coated with any suitable resin or tackifying agent known to those of ordinary skill in the art. In certain embodiments, the particulates may be present in the treatment fluids of the present invention in an amount in the range of from about 0.060kg/L to 3.59kg/L (0.5 pounds per gallon ("ppg") to about 30 ppg) by volume of the treatment fluid.

An embodiment of a method of the present invention comprises introducing a treatment fluid into a subterranean formation, wherein the treatment fluid comprises a carrier fluid and a quaternary ammonium surfactant comprising a bulky head group. The treatment fluids and methods of the present invention may be useful in other operations performed in subterranean formations. Such operations include, but are not limited to, a fracturing operation, a well bore cleanup operation, a viscous sweep, an acidizing operation, and any combination thereof. For example, it may be desirable to include the cationic surfactant in a fluid used in fracturing, or acidizing to reduce water blocks and/or gas condensates that may invade the production zone. One of ordinary skill in the art, with the benefit of the present disclosure, will recognize suitable operations in which the treatment fluids of the present invention may be used.

In certain embodiments, the treatment fluids of the present invention may be used in fracturing operations in a subterranean formation. In these embodiments, a treatment fluid of the present invention may be pumped into a well bore that penetrates a subterranean formation at a sufficient hydraulic pressure to create or enhance one or more cracks, or "fractures," in the subterranean formation. "Enhancing" one or more fractures in a subterranean formation, as that term is used herein, is defined to include the extension or enlargement of one or more natural or previously created fractures in the subterranean formation. The treatment fluids of the present invention used in these embodiments optionally may comprise particulates, often referred to as "proppant particulates," that may be deposited in the fractures. The proppant particulates may function, *inter alia,* to prevent one or more of the fractures from fully closing upon the release of hydraulic pressure, forming conductive channels through which fluids may flow to the well bore. Once at least one fracture is created and the proppant particulates are substantially in place, the viscosity of the treatment fluid of the present invention may be reduced (*e.g*., through the use of a gel breaker, or allowed to reduce naturally over time) to allow it to be recovered.

In certain embodiments, the treatment fluids of the present invention may be used in acidizing and/or acid fracturing operations. In these embodiments, a portion of the subterranean formation is contacted with a treatment fluid of the present invention comprising one or more organic acids (or salts thereof) and one or more inorganic acids (or salts thereof), which interact with subterranean formation to form "voids" (*e.g*., cracks, fractures, wormholes, etc.) in the formation. After acidization is completed, the treatment fluid of the present invention (or some portion thereof) may be recovered to the surface. The remaining voids in the subterranean formation may, *inter alia,* enhance the formation's permeability, and/or increase the rate at which fluids subsequently may be produced from the formation. In certain embodiments, a treatment fluid of the present invention may be introduced into the subterranean formation at or above a pressure sufficient to create or enhance one or more fractures within the subterranean formation. In other embodiments, a treatment fluid of the present invention may be introduced into the subterranean formation below a pressure sufficient to create or enhance one or more fractures within the subterranean formation.

In certain embodiments, the treatment fluids of the present invention may be used in a wellbore cleanup operation for the reduction of existing water blocks and/or gas condensates. It is believed that the presence of the quaternary ammonium surfactant in the subterranean formation should also reduce the subsequent formation of water blocks and/or gas condensates in the formation.

The present disclosure provides methods that include a method comprising: providing a treatment fluid comprising: an aqueous base fluid, and a quaternary ammonium surfactant described by at least the following formula: 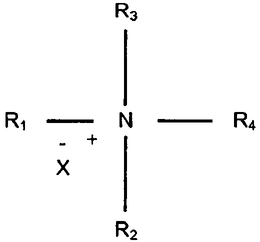
wherein R₁ is either a saturated or unsaturated, branched or straight chain alkyl comprising about 12 carbons to about 22 carbons, and R₂, R₃ and R₄ are independently selected from the group consisting of either a saturated or unsaturated, branched or straight chain alkyl or aryl group comprising about 1 to about 14 carbons, and any combination thereof; and introducing the treatment fluid into at least a portion of a subterranean formation.

The present disclosure provides methods that include a method comprising: providing a treatment fluid comprising: an aqueous base fluid, a friction reducing agent, and a quaternary ammonium surfactant described by at least the following formula: 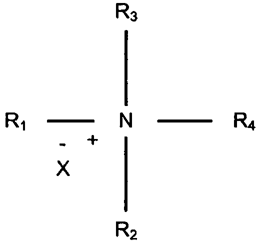
wherein R₁ is either a saturated or unsaturated, branched or straight chain alkyl comprising about 12 carbons to about 22 carbons, and R₂, R₃ and R₄ are independently selected from the group consisting of either a saturated or unsaturated, branched or straight chain alkyl or aryl comprising about 1 to about 14 carbons, and any combination thereof; and introducing the treatment fluid into at least a portion of a subterranean formation at a rate and pressure sufficient to create or enhance at least one or more fractures in the subterranean formation.

The present disclosure provides compositions that include a treatment fluid comprising: an aqueous base fluid; a friction reducing agent; and a quaternary ammonium surfactant described by at least the following formula: 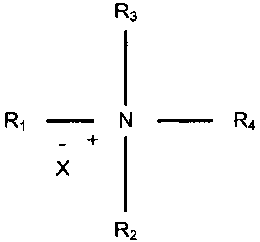
wherein R₁ is either a saturated or unsaturated, branched or straight chain alkyl comprising about 12 carbons to about 22 carbons, and R₂, R₃ and R₄ are independently selected from the group consisting of either a saturated or unsaturated, branched or straight chain alkyl or aryl comprising about 1 to about 14 carbons, and any combination thereof.

To facilitate a better understanding of the present invention, the following examples of the preferred embodiments are given. In no way should the following examples be read to limit, or define, the scope of the invention.

### EXAMPLES

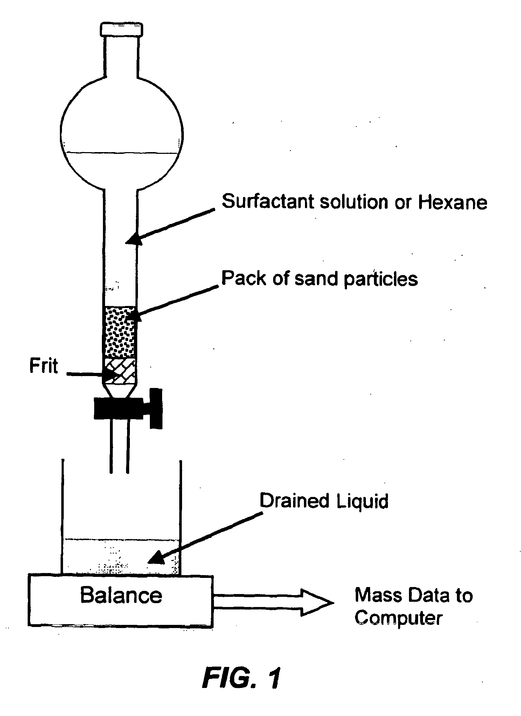

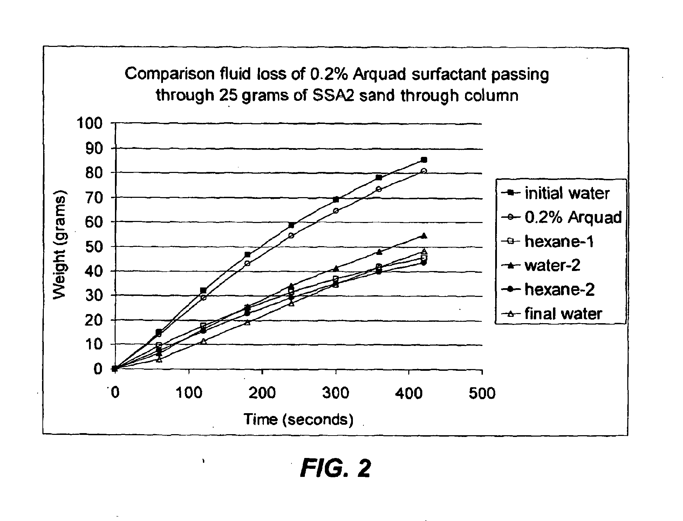

Vertical sand column tests were performed on 0.2% hydrogenated tallow dimethyl octyl ammonium chloride surfactant. A vertical glass column (with internal diameter ∼1.25 cm, total height of about 53cm (21") and containing a large glass solvent reservoir) having a total volume of about 400 ml and a drainage stopcock was used for these experiments. The column was filled with 25g Oklahoma No.1 sand (also known as SSA-2 sand) dispersed in about 100 ml water. The sand was allowed to settle for 15 minutes and then water was drained through the column until the sand pack was just covered by water This apparatus is shown in Figure 1. No external pressure was applied to the sand column- the only pressure arises from the height of the column of fluid above the sand. The amount of each fluid passed through the sand column was measured using a balance connected to a computer. The rate of water flow through the pack was termed the initial water flow. 100 ml of 0.2% aqueous solution of the surfactant was then added to the column in a manner to give minimum disturbance to the sand pack and this was again passed through the vertical column until the last of the solution just reached the top of the sand pack. This fluid flow was termed the surfactant flow. Immediately after passing this 100 ml surfactant solution, 100 ml hexane was placed on top of the sand pack and allowed to pass through the sand column, again until the last of the hexane just covered the sand pack. This was termed hexane 1 flow. Then 100 mL water was again added to the column giving minimum disturbance to the sand and this passed through the sand column (again until the last of the water just covered the sand pack). Figure 2 shows the data for the experiment using hydrogenated tallow dimethyl octyl ammonium chloride surfactant solution. It should be noted that hexane will not pass through the sand pack at all after the initial flow of water, if the sand is not treated with surfactant. Flow rates (initial) were calculated from the initial slopes using Figure 2.

## Claims

1. A method comprising:
providing a treatment fluid comprising:
an aqueous base fluid, and
a quaternary ammonium surfactant described by at least the following formula: 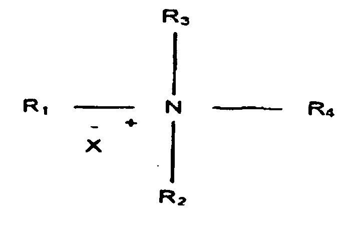
wherein R₁ is either a saturated or unsaturated, branched or straight chain alkyl comprising 12 carbons to 22 carbons, and R₂ R₃ and R₄ are independently selected from the group consisting of either a saturated or unsaturated, branched or straight chain alkyl or aryl group comprising 1 to 14 carbons, and any combination thereof; and introducing the treatment fluid into at least a portion of a subterranean formation, wherein the quaternary surfactant is selected from the group consisting of a dialkyldiethylammonium chloride, a polyethoxylated alkylammmonium chloride, or combinations thereof.

2. The method of claim 1 wherein the sum of the carbon atoms in R₂, R₃ and R₄ is at least 6, preferably
wherein the sum of the carbons in R₂ R3 and R₄ ranges from 6 to 16, preferably
wherein the sum of the carbons in R₂, R₃ and R₄ ranges from 10 to 12.

3. The method of any preceding claim wherein the quaternary ammonium surfactant reduces the occurrence of water blocks and/or gas condensates in a portion of the subterranean formation.

4. The method of any preceding claim wherein the quaternary ammonium surfactant is adsorbed onto a rock surfaces in a portion of the formation.

5. The method of any preceding claim wherein the aqueous base fluid comprises a fluid selected from the group consisting of fresh water, salt water, brine, seawater, and any combination thereof.

6. The method of any preceding claim wherein the aqueous base fluid is present in an amount in the range of 75% to 99.9% of the treatment fluid.

7. The method of any preceding claim wherein the quaternary surfactant is present in an amount of 0.001 % to 3% by volume of the treatment fluid.

8. The method of any preceding claim wherein the treatment fluid further comprises a friction reducing agent.

9. The method of any preceding claim wherein the treatment fluid further comprises additional additives selected from the group consisting of a viscosifying agent, a corrosion inhibitor, a proppant particulate, a gravel particulate, an acid, a fluid loss control additive, a breaker, a scale inhibitor, and a clay stabilizer.

10. The method of any preceding claim wherein the subterranean treatment fluid is used as part of an oilfield operation selected from the group consisting of a fracturing operation, a well bore cleanup operation, a viscous sweep, an acidizing operation, and any combination thereof.

11. A method according to any preceding claim wherein the treatment fluid further comprises a friction reducing agent and wherein said treatment fluid is introduced into at least a portion of a subterranean formation at a rate and pressure sufficient to create or enhance at least one or more fractures in the subterranean formation.

12. The method of claim 11 wherein the quaternary surfactant is present in an amount of 0.0 1 % to 10% by volume of the treatment fluid.

13. The method of claim 11 or 12 wherein the treatment fluid comprises a plurality of proppant particulates.

14. A treatment fluid comprising:
an aqueous base fluid;
a friction reducing agent; and
a quaternary ammonium surfactant described by at least the following formula: 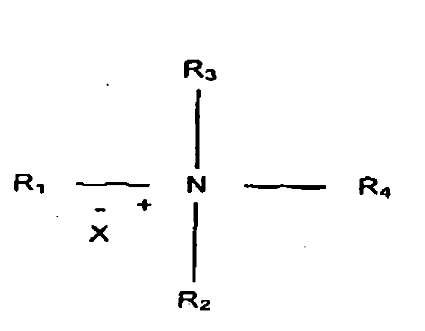
wherein R1, is either a saturated or unsaturated, branched or straight chain alkyl comprising 12 carbons to 22 carbons, and R₂ , R₃ and R₄ are independently selected from the group consisting of either a saturated or unsaturated, branched or straight chain alkyl or aryl comprising 1 to 14 carbons, and any combination thereof, wherein the quaternary surfactant is selected from the group consisting of a dialkyldiethylammonium chloride, a polyethoxylated alkylammmonium chloride, or combinations thereof.

15. A treatment fluid according to claim 14 wherein the treatment fluid is as defined in any one of claims 2 to 13.

## Patentansprüche

1. Verfahren, Folgendes umfassend:
Bereitstellen eines Behandlungsfluids, das Folgendes umfasst:
ein wässriges Basisfluid und
ein quaternäres Ammoniumtensid, das durch mindestens die folgende Formel beschrieben ist: 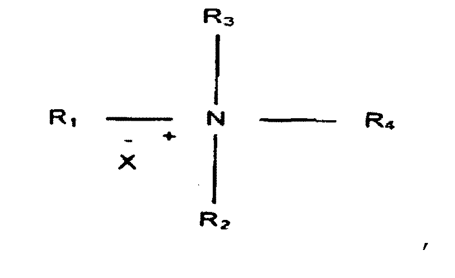
wobei R₁ entweder ein gesättigtes oder ungesättigtes, verzweigtes oder geradkettiges Alkyl ist, das 12 bis 22 Kohlenstoffatome umfasst, und R₂, R₃ und R₄ unabhängig voneinander aus der Gruppe ausgewählt werden, die aus entweder einer gesättigten oder ungesättigten, verzweigten oder geradkettigen Alkyl- oder Arylgruppe mit 1 bis 14 Kohlenstoffatomen und jeglicher Kombination daraus besteht,
und
Einführen des Behandlungsfluids in mindestens einen Abschnitt einer unterirdischen Formation, wobei das quaternäre Tensid aus der Gruppe ausgewählt wird, die aus einem Dialkyldiethylammoniumchlorid, einem polyethoxylierten Alkylammoniumchlorid oder Kombinationen daraus besteht.

2. Verfahren nach Anspruch 1, wobei die Summe der Kohlenstoffatome in R₂, R₃ und R₄ mindestens 6 beträgt,
wobei die Summe der Kohlenstoffatome in R₂, R₃ und R₄ vorzugsweise im Bereich von 6 bis 16 liegt,
wobei die Summe der Kohlenstoffatome in R₂, R₃ und R₄ vorzugsweise im Bereich von 10 bis 12 liegt.

3. Verfahren nach einem der vorhergehenden Ansprüche, wobei das quaternäre Ammoniumtensid das Auftreten von Wasserblöcken und/oder Gaskondensaten in einem Abschnitt der unterirdischen Formation verringert.

4. Verfahren nach einem der vorhergehenden Ansprüche, wobei das quaternäre Ammoniumtensid an Felsoberflächen in einem Abschnitt der Formation adsorbiert wird.

5. Verfahren nach einem der vorhergehenden Ansprüche, wobei das wässrige Basisfluid ein Fluid umfasst, das aus der Gruppe ausgewählt wird, die aus Süßwasser, Salzwasser, Salzlake, Meerwasser und jeglicher Kombination daraus besteht.

6. Verfahren nach einem der vorhergehenden Ansprüche, wobei das wässrige Basisfluid in einer Menge im Bereich von 75 % bis 99,9 % des Behandlungsfluids vorhanden ist.

7. Verfahren nach einem der vorhergehenden Ansprüche, wobei das quaternäre Tensid in einer Menge von 0,001 % bis 3 % des Volumens des Behandlungsfluids vorhanden ist.

8. Verfahren nach einem der vorhergehenden Ansprüche, wobei das Behandlungsfluid ferner ein Reibungsreduktionsmittel umfasst.

9. Verfahren nach einem der vorhergehenden Ansprüche, wobei das Behandlungsfluid ferner zusätzliche Additive umfasst, die aus der Gruppe ausgewählt werden, die aus einem Viskosifizierungsmittel, einem Korrosionshemmer, Stützmittelpartikeln, Kiespartikeln, einer Säure, einem Fluidverluststeuerungs-Additiv, einem Bindungsbrecher, einem Ablagerungshemmer und einem Tonstabilisator besteht.

10. Verfahren nach einem der vorhergehenden Ansprüche, wobei das Fluid zur unterirdischen Behandlung als Teil eines Vorgangs bei der Erdölförderung verwendet wird, der aus der Gruppe ausgewählt wird, die aus einem Fracking-Vorgang, einem Bohrloch-Säuberungsvorgang, einer viskosen Bohrspülung, einem Säuerungsvorgang und jeglicher Kombination daraus besteht.

11. Verfahren nach einem der vorhergehenden Ansprüche, wobei das Behandlungsfluid ferner ein Reibungsreduktionsmittel umfasst und wobei das Behandlungsfluid in mindestens einen Abschnitt einer unterirdischen Formation mit einer Rate und einem Druck eingeführt wird, die ausreichend sind, um mindestens einen oder mehrere Brüche in der unterirdischen Formation zu erzeugen oder auszuweiten.

12. Verfahren nach Anspruch 11, wobei das quaternäre Tensid in einer Menge von 0,01 bis 10 % des Volumens des Behandlungsfluids vorhanden ist.

13. Verfahren nach Anspruch 11 oder 12, wobei das Behandlungsfluid mehrere Stützmittelpartikel umfasst.

14. Behandlungsfluid, Folgendes umfassend:
ein wässriges Basisfluid,
ein Reibungsreduktionsmittel und
ein quaternäres Ammoniumtensid, das durch mindestens die folgende Formel beschrieben ist: 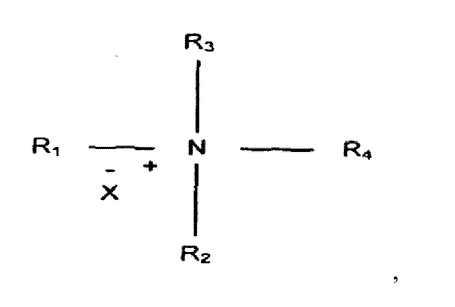
wobei R1 entweder ein gesättigtes oder ungesättigtes, verzweigtes oder geradkettiges Alkyl ist, das 12 bis 22 Kohlenstoffatome umfasst, und R₂, R₃ und R₄ unabhängig voneinander aus der Gruppe ausgewählt sind, die aus entweder gesättigtem oder ungesättigtem, verzweigtem oder geradkettigem Alkyl oder Aryl mit 1 bis 14 Kohlenstoffatomen und jeglicher Kombination daraus besteht, wobei das quaternäre Tensid aus der Gruppe ausgewählt ist, die aus einem Dialkyldiethylammoniumchlorid, einem polyethoxylierten Alkylammoniumchlorid oder Kombinationen daraus besteht.

15. Behandlungsfluid nach Anspruch 14, wobei das Behandlungsfluid so ist wie nach einem der Ansprüche 2 bis 13 definiert.

## Revendications

1. Procédé comprenant :
la préparation d'un fluide de traitement comprenant :
un fluide de base aqueux, et
un tensioactif dérivé d'ammonium quaternaire décrit par au moins la formule suivants : 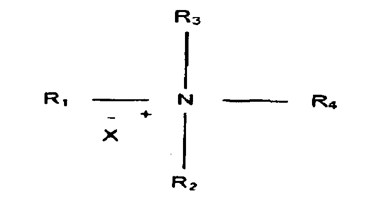
dans laquelle R₁ est un groupe alkyle linéaire ou ramifié, saturé ou insaturé, contenant de 12 à 22 atomes de carbone, et R₂, R₃ et R₄ sont choisis indépendamment dans le groupe constitué par un groupe alkyle ou aryle linéaire ou ramifié, saturé ou insaturé contenant de 1 à 14 atomes de carbone, ainsi qu'une combinaison quelconque de ceux-ci ; et
l'introduction du fluide de traitement dans une partie au moins d'une formation souterraine, ledit tensioactif quaternaire étant choisi dans le groupe constitué par un chlorure de dialkyldiéthylammonium, un chlorure d'alkylammonium polyéthoxylé ou des combinaisons de ceux-ci.

2. Procédé selon la revendication 1, dans lequel la somme des atomes de carbone contenus dans R₂, R₃ et R₄ est au moins égale à 6, de préférence
dans lequel la somme des atomes de carbone contenus dans R₂, R₃ et R₄ va de 6 à 16, de préférence
dans lequel la somme des atomes de carbone contenus dans R₂, R₃ et R₄ va de 10 à 12.

3. Procédé selon l'une quelconque des revendications précédentes, dans lequel le tensioactif dérivé d'ammonium quaternaire réduit l'apparition de colmatages par l'eau et/ou de condensats gazeux dans une partie de la formation souterraine.

4. Procédé selon l'une quelconque des revendications précédentes, dans lequel le tensioactif dérivé d'ammonium quaternaire est adsorbé sur les surfaces d'une roche dans une partie de la formation.

5. Procédé selon l'une quelconque des revendications précédentes, dans lequel le fluide de base aqueux comprend un fluide choisi dans le groupe constitué par de l'eau douce, de l'eau salée, de l'eau saumâtre, de l'eau de mer, ainsi qu'une combinaison quelconque de celles-ci.

6. Procédé selon l'une quelconque des revendications précédentes, dans lequel le fluide de base aqueux est présent en une quantité allant de 75% à 99,9% du fluide de traitement.

7. Procédé selon l'une quelconque des revendications précédentes, dans lequel ledit tensioactif quaternaire est présent en une quantité de 0,001% à 3% en volume du fluide de traitement.

8. Procédé selon l'une quelconque des revendications précédentes, dans lequel le fluide de traitement comprend en outre un agent de réduction du frottement.

9. Procédé selon l'une quelconque des revendications précédentes, dans lequel le fluide de traitement comprend en outre d'autres additifs choisis dans le groupe constitué par un agent viscosifiant, un inhibiteur de corrosion, un agent de soutènement particulaire, un agent de gravillonnage particulaire, un acide, un additif de régulation des pertes de fluide, un agent de rupture, un inhibiteur d'entartrage et un stabilisateur d'argile.

10. Procédé selon l'une quelconque des revendications précédentes, dans lequel le fluide de traitement souterrain est utilisé dans le cadre d'une opération de production pétrolière choisie dans le groupe constitué par une opération de fracturation, une opération de curage de puits, un balayage visqueux, une opération d'acidification, ainsi qu'une combinaison quelconque de ces opérations.

11. Procédé selon l'une quelconque des revendications précédentes, dans lequel le fluide de traitement comprend en outre un agent de réduction du frottement et dans lequel ledit fluide de traitement est introduit dans une partie au moins d'une formation souterraine à un débit et à une pression suffisants pour créer ou renforcer au moins une ou plusieurs fractures dans la formation souterraine.

12. Procédé selon la revendication 11, dans lequel ledit tensioactif quaternaire est présent en une quantité allant de 0,01% à 10% en volume du fluide de traitement.

13. Procédé selon la revendication 11 ou la revendication 12, dans lequel le fluide de traitement comprend une pluralité d'agents de soutènement particulaires.

14. Fluide de traitement comprenant :
un fluide de base aqueux ;
un agent de réduction du frottement ; et
un tensioactif dérivé d'ammonium quaternaire décrit par au moins la formule suivante : 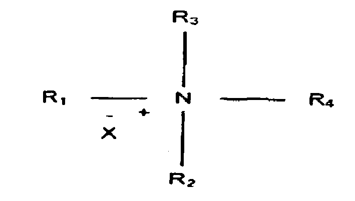
dans laquelle R1 est un groupe alkyle linéaire ou ramifié, saturé ou insaturé, contenant de 12 à 22 atomes de carbone, et R₂, R₃ et R₄ sont choisis indépendamment dans le groupe constitué par un groupe alkyle ou aryle linéaire ou ramifié, saturé ou insaturé contenant de 1 à 14 atomes de carbone, ainsi qu'une combinaison quelconque de ceux-ci, ledit tensioactif quaternaire étant choisi dans le groupe constitué par un chlorure de dialkyldiéthylammonium, un chlorure d'alkylammonium polyéthoxylé, ou des combinaisons de ceux-ci.

15. Fluide de traitement selon la revendication 14, dans lequel le fluide de traitement est tel que défini dans l'une quelconque des revendications 2 à 13.
